# EUROPÄISCHE PATENTSCHRIFT

(11) **EP 0 743 270 B1**
(45) Veröffentlichungstag und Bekanntmachung des Hinweises auf die Patenterteilung: **02.11.2000**
(21) Anmeldenummer: 96105766.8
(22) Anmeldetag: 12.04.1996
(51) Int. Cl.: B65H 3/32, B65G 61/00, B65G 57/00

(54) **Vorrichtung zum Entstapeln von blockweise und unter Einfügung von flachen Zwischenlagen auf Paletten gestapelten Zuschnitten**
Device for de-stacking sheets piled in block-form with inserted flat intermediate elements on pallets
Dispositif pour le désempilage de feuilles empilées en blocs avec interposition d'éléments plats sur des palettes

(30) Priorität: 18.05.1995 DE 19518256
(43) Veröffentlichungstag der Anmeldung: 20.11.1996
(73) Patentinhaber: TOPACK Verpackungstechnik GmbH, 21493 Schwarzenbek (DE)
(72) Erfinder: Schroeder, Arno, 58642 Iserlohn-Letmathe (DE)
(74) Vertreter: Stenger, Watzke & Ring Patentanwälte

(56) Entgegenhaltungen:
- EP-A- 0 363 722
- EP-A- 0 369 547
- DE-A- 3 718 601
- DE-U- 9 110 004
- DE-U- 9 111 787

## Beschreibung

Die Erfindung betrifft eine Vorrichtung zum Entstapeln von blockweise und unter Einfügung von flachen Zwischenlagen auf Paletten gestapelten Zuschnitten, mit einem räumlich gesteuert verfahrbaren Greifkopf, an dem ein etwa waagerecht ausgerichtetes, in einer scharfen Einstechspitze auslaufendes Einstechwerkzeug angeordnet ist, welches den jeweils zu entnehmenden Zuschnittblock durch eine waagerechte Bewegung untergreift und aufnimmt.

Derartige Vorrichtungen zum Entstapeln von blockweise auf Paletten aufliegenden Zuschnitten sind aus der EP 0 363 722 A1 bekannt. An einem Greifkopf ist ein Einstechwerkzeug befestigt, welches um eine waagerechte Achse geringfügig verschwenkbar gelagert ist. Die Verschwenkbewegung des Einstechwerkzeuges wird durch einen Schalthebel überwacht, der mittels eines Schalters die Absenkbewegung des Greifkopfes unterbricht, sobald das Einstechwerkzeug entgegen einer einstellbaren Federkraft um einen vorgegebenen Winkel verschwenkt worden ist. Diese Vorrichtungen, zu denen Weiterbildungen in der DE-U 91 11 787 und in der DE-U 91 10 004 offenbart sind, arbeiten in der ganz überwiegenden Zahl der Fälle störungsfrei, d.h. das Einstechwerkzeug fährt mit seiner Einstechspitze exakt in den schmalen Spalt zwischen der Zwischenlage und dem untersten Zuschnitt des Zuschnittblocks ein.

Es gibt jedoch Fälle, in denen das Einstechwerkzeug diesen Spalt geringfügig verfehlt und stattdessen mit seiner Einstechspitze gegen den untersten Zuschnitt fährt. Dies behindert zwar den weiteren Ablauf des Entstapelns nicht, da die eintretende Verformung des unteren Zuschnittes keinen Einfluß auf die oberhalb angeordneten, weiteren Zuschnitte des Zuschnittblocks hat. Dieser läßt sich also auch in dem geschilderten Fall von der Zwischenlage aufnehmen. Störungen treten jedoch in der nachfolgenden Verpackungsstation auf, in der der untere, verformte Zuschnitt nicht verarbeitet werden kann.

Der Erfindung liegt daher die **Aufgabe** zugrunde, bei einer Vorrichtung zum Entstapeln von blockweise und unter Einfügung von flachen Zwischenlagen auf Paletten gestapelten Zuschnitten fehlerhaft ergriffene Zuschnittblöcke vor deren weiterer Verarbeitung zu erkennen.

Zur **Lösung** wird eine Vorrichtung der eingangs genannten Art vorgeschlagen, welche gekennzeichnet ist durch eine mit einem an der Unterseite des Einstechwerkzeuges angeordneten Reflexionselement zusammenwirkende Sensoreinrichtung mit einem auf das Reflexionselement ausgerichteten Sendeelement sowie einem zugeordneten Empfängerelement.

Der Erfindung liegt die Erkenntnis zugrunde, daß in jenen Fällen, in denen die Einstechspitze des Einstechwerkzeuges gegen den untersten Zuschnitt des Zuschnittblocks fährt, dieser unterste Zuschnitt, ausgehend von seiner Stirnkante, zunächst aufgeschlitzt wird. Dies ist möglich, da die Zuschnitte aus mehrschichtig aufgebautem Karton mit einer Dicke von 0,3 bis 0,7 mm bestehen. Im Laufe des weiteren Einfahrens des Einstechwerkzeuges setzt sich diese Aufspaltung des Zuschnittes nicht fort, sondern das Einstechwerkzeug fährt mit seiner geringfügig nach unten gebogenen Einstechspitze wieder aus dem Zuschnitt heraus und bewegt sich den Rest des Weges in der vorgesehenen Weise zwischen Zuschnitt und Zwischenlage. Zugleich wird der unterste Zuschnitt auf ganzer Länge gestaucht. Hat das Einstechwerkzeug in horizontaler Richtung seine Endposition erreicht, sieht der Zuschnittblock auf den ersten Blick einwandfrei aus; erst ein genaues Hinsehen zeigt, daß der untere Zuschnitt teils aufgeschlitzt, teilweise gestaucht ist, wobei sich ein Teil dieses unteren Zuschnitts an der Unterseite des Einstechwerkzeuges befindet. Diese Tatsache wird bei der Erfindung ausgenutzt und mittels eines an der Unterseite des Einstechwerkzeuges angeordneten Reflexionselementes sowie einer damit zusammenwirkenden Sensoreinrichtung für jeden einzelnen Zuschnittblock überprüft, ob sich an der Unterseite des Einstechwerkzeuges Teile eines Zuschnitts befinden. Ist dies der Fall, wird der entsprechende Zuschnittblock nicht der nachfolgenden Verpackungsstation zugeführt, sondern zunächst zwecks Entfernung des zerstörten Zuschnittes ausgesondert.

Eine besonders sichere Erkennung fehlerhaft aufgenommener Zuschnittblöcke wird erreicht, wenn sich das Reflexionselement innerhalb der vorderen Hälfte des Einstechwerkzeuges befindet.

Gemäß einer Ausgestaltung der Vorrichtung können Sende- und Empfängerelement in einer Sensoreinheit zusammengefaßt sein.

Schließlich wird mit der Erfindung vorgeschlagen, als Sendeelement eine Lichtquelle und als Reflexionselement einen optischen Spiegel zu verwenden.

Weitere Vorteile und Einzelheiten der Vorrichtung werden nachfolgend anhand der Zeichnungen erläutert. Darin zeigen:
- Fig. 1: eine perspektivische Darstellung einer üblichen, mit Zuschnittblöcken beladenen Palette;
- Fig. 2: eine perspektivische Darstellung einer Vorrichtung zum Entstapeln von blockweise und unter Einfügung von flachen Zwischenlagen auf Paletten gestapelten Zuschnitten;
- Fig. 3: die Vorrichtung gemäß Fig. 2 in einem nachfolgenden Arbeitsschritt;
- Fig. 4: die Vorrichtung gemäß Fig. 2 in einem nochmals späteren Arbeitsschritt;
- Fig. 5: in einer Seitenansicht die Überprüfung des mit der Vorrichtung gemäß Fig. 2 aufgenommenen Zuschnittblockes mittels eines Sensors im Falle eines ordnungsgemäß aufgenommenen Zuschnittblocks und
- Fig. 6: in einer Seitenansicht die Überprüfung des mit der Vorrichtung gemäß Fig. 2 aufgenommenen Zuschnittblockes mittels eines Sensors im Falle eines nicht ordnungsgemäß gegriffenen Zuschnittblockes.

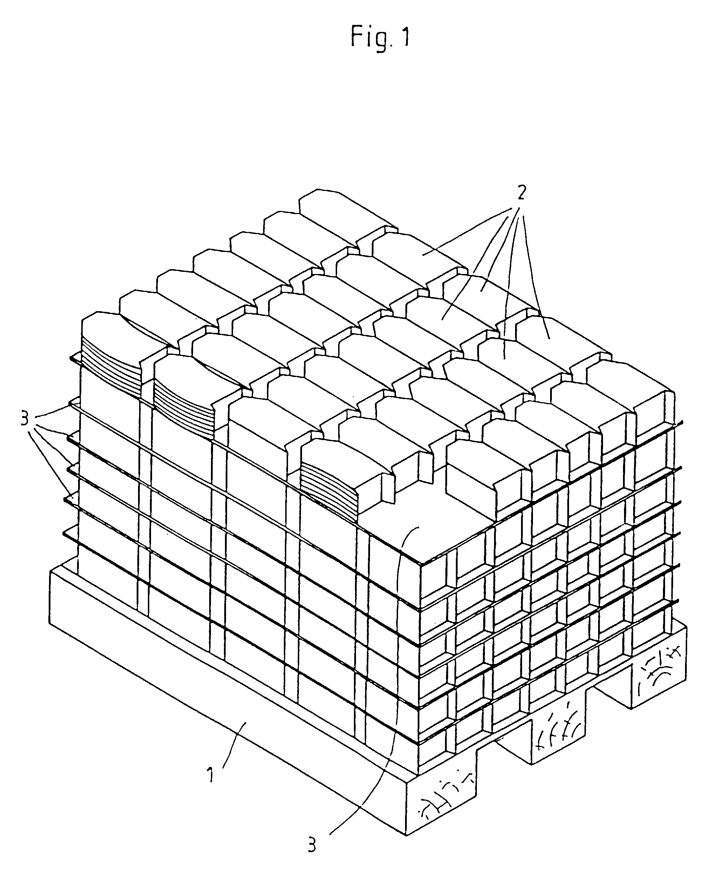

In Fig. 1 ist eine Palette 1 dargestellt, auf der eine Mehrzahl von Zuschnittblöcken 2 gestapelt ist, wobei die übereinanderliegenden Zuschnittblöcke 2 jeweils durch eine Zwischenlage 3 getrennt sind, welche die gesamte Fläche der Palette 1 überdeckt.

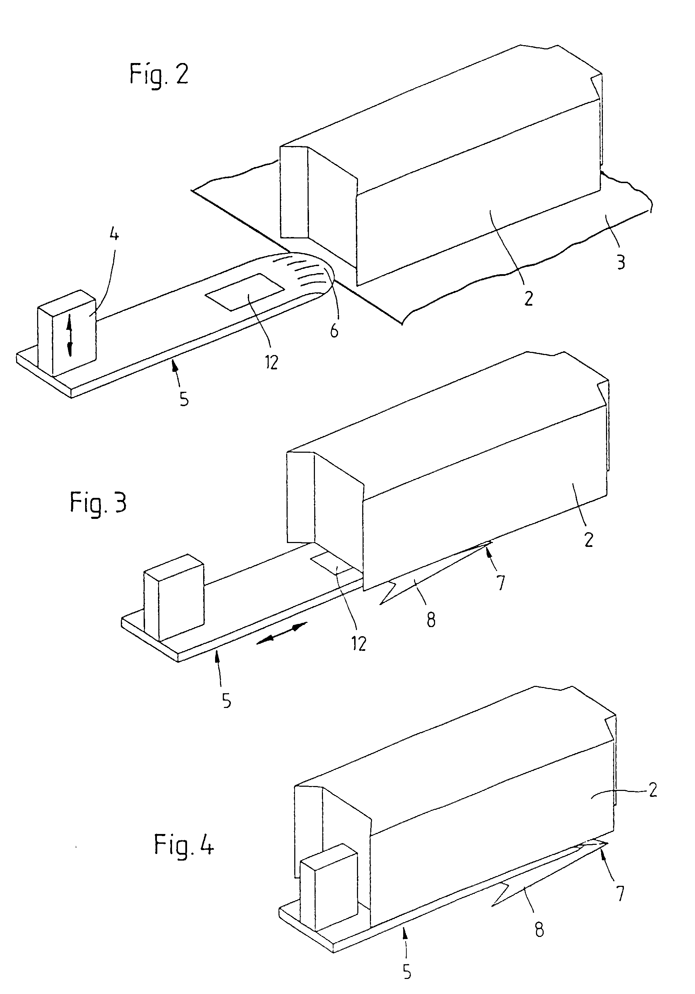

In Fig. 2 ist dargestellt, wie ein einzelner Zuschnittblock 2 mittels eines an einem räumlich gesteuert verfahrbaren Greifkopf 4 angeordneten Einstechwerkzeuges 5 aufgenommen werden kann. Hierzu senkt sich das Einstechwerkzeug 5 soweit herab, bis seine scharf geformte Einstechspitze 6 auf der nach vorne über den Zuschnittblock 2 hinaus vorstehenden Zwischenlage 3 aufliegt. Sodann wird das Einstechwerkzeug 5 mittels des Greifkopfes 4 horizontal in Richtung auf den Zuschnittblock 2 bewegt, wobei die Einstechspitze 6 im Normalfall in den sich bildenden Spalt zwischen Zwischenlage 3 und dem untersten Zuschnitt des Zuschnittblocks 2 einfährt.

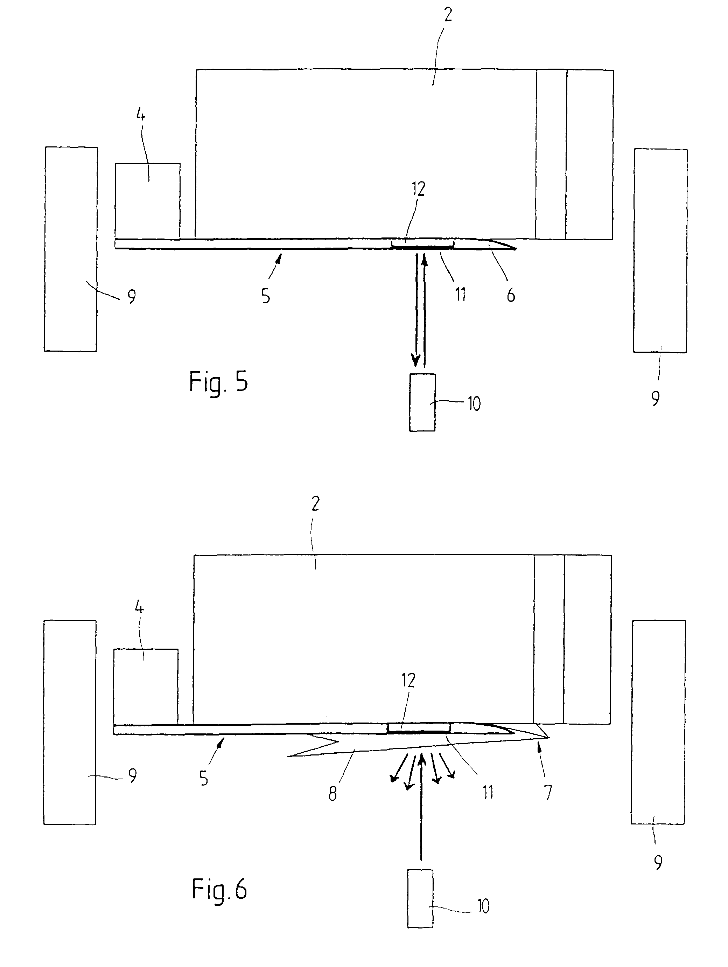

Abweichend von diesem Normalfall kann es jedoch in einzelnen Fällen passieren, daß die Einstechspitze 6 des Einstechwerkzeuges 5 nicht unterhalb des unteren Zuschnittes gelangt, sondern unmittelbar diesen unteren Zuschnitt erfaßt und während des horizontalen Verfahrens aufschlitzt. Die hierbei auf den unteren Zuschnitt einwirkenden Kräfte führen dazu, daß dieser untere Zuschnitt 7, wie in den Figuren 3 und 4 dargestellt ist, teilweise gestaucht wird, wobei sich schließlich ein Teil 8 des unteren Zuschnittes 7 unter dem Einstechwerkzeug 5 befindet. Gleichwohl hat das Einstechwerkzeug 5 am Ende seines horizontalen Weges den Zuschnittblock 2 in der in Fig. 4 dargestellten Weise vollständig übernommen. Würde ein solcher Zuschnittblock 2 jedoch einer nachgeschalteten Verpackungseinheit zugeführt, würden spätestens dort Störungen infolge des zerstörten unteren Zuschnittes 7 eintreten.

Jeder entstapelte Zuschnittblock 2 wird daher einer Prüfung unterzogen, deren Ablauf nachfolgend anhand der Figuren 5 und 6 erläutert wird.

In Fig. 5 ist ein ordnungsgemäß aufgenommener Zuschnittblock 2 dargestellt, der mittels des Einstechwerkzeuges 5 in eine Ausrichtstation 9 abgesenkt wird. In dieser Ausrichtstation 9 befindet sich unterhalb des Einstechwerkzeuges 5 eine aus einem Sendeelement sowie einem zugeordneten Empfängerelement zusammengesetzte Sensoreinrichtung 10. Das Sendeelement der Sensoreinrichtung 10 erzeugt ein optisches Signal, welches von unten gegen ein an dem Einstechwerkzeug 5 angeordnetes Reflexionselement 11 gerichtet wird. Das Reflexionselement 11 ist ein nach unten gerichteter optischer Spiegel, z.B. eine Reflexionsfolie. Zur Unterbringung des Reflexionselementes 11 ist das Einstechwerkzeug 5 mit einer Vertiefung 12 versehen, welche auch auf den Figuren 2 und 3 angedeutet ist. Das Reflexionselement 11 befindet sich hinter der leicht nach unten abgebogenen Einstechspitze 6 innerhalb der vorderen Hälfte des Einstechwerkzeuges 5.

In Fig. 6 ist die Prüfung im Fall eines nicht ordnungsgemäß aufgenommenen Zuschnittblocks 2 dargestellt. Der teils aufgeschlitzte, teils gestauchte untere Zuschnitt 7 befindet sich mit einem Teil 8 unterhalb des Einstechwerkzeuges 5 und damit unterhalb des Reflexionselementes 11. Das von dem Sendeelement der Sensoreinrichtung 10 ausgesandte optische Signal wird nicht an dem Reflexionselement 11 reflektiert, wodurch ein fehlerhaft übernommener Zuschnittblock 2 erkannt wird. Dieser Zuschnittblock 2 wird der einer Verpackungsstation vorgeschalteten Ausrichtstation 9 wieder entnommen und zunächst zwecks Entfernung des unteren Zuschnittes 7 ausgesondert.

### Bezugszeichenliste

- 1: Palette
- 2: Zuschnittblock
- 3: Zwischenlage
- 4: Greifkopf
- 5: Einstechwerkzeug
- 6: Einstechspitze
- 7: unterer Zuschnitt
- 8: Teil des unteren Zuschnitts
- 9: Ausrichtstation
- 10: Sensoreinrichtung
- 11: Reflexionselement
- 12: Vertiefung

## Patentansprüche

1. Vorrichtung zum Entstapeln von blockweise und unter Einfügung von flachen Zwischenlagen (3) auf Paletten (1) gestapelten Zuschnitten (2), mit einem räumlich gesteuert verfahrbaren Greifkopf (4), an dem ein etwa waagerecht ausgerichtetes, in einer scharfen Einstechspitze (6) auslaufendes Einstechwerkzeug (5) angeordnet ist, welches den jeweils zu entnehmenden Zuschnittblock (2) durch eine waagerechte Bewegung untergreift und aufnimmt,
**gekennzeichnet durch**
eine mit einem an der Unterseite des Einstechwerkzeuges (5) angeordneten Reflexionselement (11) zusammenwirkende Sensoreinrichtung (10) mit einem auf das Reflexionselement (11) ausgerichteten Sendeelement sowie einem zugeordneten Empfängerelement.

2. Vorrichtung nach Anspruch 1, dadurch gekennzeichnet, daß sich das Reflexionselement (11) innerhalb der vorderen Hälfte des Einstechwerkzeuges (5) befindet.

3. Vorrichtung nach Anspruch 1 oder Anspruch 2, dadurch gekennzeichnet, daß Sende- und Empfängerelement in einer Sensoreinheit zusammengefaßt sind.

4. Vorrichtung nach einem der Ansprüche 1 bis 3, gekennzeichnet durch eine Lichtquelle als Sendeelement und einen optischen Spiegel als Reflexionselement (11).

## Claims

1. Apparatus for destacking blanks (2) stacked in block form on pallets (1) with the introduction of flat intermediate layers (3), having a gripping head (4) which can be displaced three-dimensionally in a controlled manner and on which there is arranged an approximately horizontally aligned insertion tool (5) which terminates in a sharp insertion tip (6) and uses a horizontal movement to engage beneath, and receive, the blank block (2) which is to be removed in each case, characterized by a sensor device (10) which interacts with a reflection element (11), arranged on the underside of the insertion tool (5), and which has a transmission element, aligned with the reflection element (11), and an associated receiver element.

2. Apparatus according to Claim 1, characterized in that the reflection element (11) is located within the front half of the insertion tool (5).

3. Apparatus according to Claim 1 or Claim 2, characterized in that the transmission and receiver elements are combined in a sensor unit.

4. Apparatus according to one of Claims 1 to 3, characterized by a light source as the transmission element and an optical mirror as the reflection element (11).

## Revendications

1. Dispositif pour le dépilage de découpes (2) empilées en blocs et avec interposition de couches intercalaires plates (3) sur des palettes (1), comprenant une tête preneuse mobile (4) qui est commandée dans l'espace et sur laquelle est disposé un outil d'insertion (5) qui est orienté de manière sensiblement horizontale et se termine par une pointe d'insertion effilée (6) et qui, par un déplacement horizontal, pénètre sous le bloc de découpes (2) à prélever et le saisit, caractérisé par un dispositif de détection (10) qui coopère avec un élément de réflexion (11) disposé sur le dessous de l'outil d'insertion (5) et qui comprend un élément d'émission orienté vers l'élément de réflexion (11) ainsi qu'un élément de réception associé.

2. Dispositif selon la revendication 1, caractérisé en ce que l'élément de réflexion (11) se trouve dans les limites de la moitié avant de l'outil d'insertion (5).

3. Dispositif selon la revendication 1 ou la revendication 2, caractérisé en ce que les éléments d'émission et de réception sont réunis en une unité de réception.

4. Dispositif selon l'une des revendications 1 à 3, caractérisé par une source lumineuse servant d'élément d'émission et par un miroir optique servant d'élément de réflexion (11).
